# EUROPEAN PATENT APPLICATION

(11) **EP 3 543 492 A1**
(43) Date of publication of application: **25.09.2019**
(21) Application number: 18163399.1
(22) Date of filing: 22.03.2018
(51) Int. Cl.: F01N 3/20

(54) **A SYSTEM FOR CONVERTING AN AMMONIA PRECURSOR INTO A GAS CONTAINING AMMONIA**

(71) Applicant: Plastic Omnium Advanced Innovation and Research, 1120 Bruxelles (BE)
(72) Inventor: DOUGNIER, François, 3191 HEVER (BE); DE MAN, Pierre, 1090 BRUXELLES (BE); SCHWEICHER, Julien, 1040 ETTERBEEK (BE); VAN SCHAFTINGEN, Jules-Joseph, 1300 WAVRE (BE)
(74) Representative: LLR

(57) **Abstract**

This conversion system (2) is be mounted in a vehicle (4) and comprises:
- a tank (6) suitable for containing an ammonia precursor,
- a decomposition unit (12) for decomposing the ammonia precursor into a gas containing ammonia,
- a buffer (20) located downstream of the decomposition unit (12) for storing the gas produced by the decomposition unit (12),
- a device (22) to be fed with the gas stored in the buffer (20), and
- a return line (24) connecting the buffer (20) to the tank (6).

## Description

The invention relates to the generation of ammonia in a vehicle. More specifically, the invention relates to a system for converting an ammonia precursor into a gas containing ammonia.

Ammonia in a gaseous form is a consumable for different types of vehicle. It can be consumed under this form or transformed in another material, for example dihydrogen. Various methods for decomposing an ammonia precursor into a gas containing ammonia are known in the art. One of the most widely used is the thermal decomposition of a urea solution, for example the commercially available solution named Adblue® which is an aqueous solution containing 32,5 wt% of urea in water. The document WO02092512 A1 discloses an example of a urea conversion system for a vehicle known in the art.

Upon starting the vehicle, time is necessary before a first quantity of ammonia gas can be produced and fed to the device using it. This start-up time may be too long, notably with a decomposition method involving thermal decomposition. For example, if the vehicle has parked outside during a winter night, the heater permitting the thermal decomposition of the ammonia precursor needs up to a few minutes before reaching the desired temperature and thus beginning the thermal decomposition. During this start-up time, the vehicle is stopped and the user has to wait for the whole time before he can use the vehicle. It is generally preferable not to store the ammonia integrally on a gaseous form in the vehicle because it would either need too much space inside the vehicle or need to be stored at a high pressure, which may be dangerous if the vehicle crashes.

One goal of the invention is to provide an ammonia conversion system for vehicle having a short start-up time and complying with the safety requirements.

To this end, a conversion system according to claim 1 is provided according to the invention.

Thanks to the presence of the buffer, it is possible to store a quantity of gas containing ammonia in the system. As such, after a first use of the system and upon the next start-up of the vehicle, ammonia is already available for the device, which makes it possible to start the vehicle immediately. Furthermore, the possibility given to store the gas containing ammonia in the buffer provides safe conditions for the shut-down of the device. In addition, the presence of the buffer increases the conversion level of the system, which can go up to 99% and above. Notably, it is possible to heat the buffer at a temperature higher than the temperature at which the conversion unit is heated in order to complete the conversion reaction and thus increase the conversion level. Moreover, thanks to the return line, the gas containing ammonia can be stored both in the buffer and in the tank. In other words, the ammonia storage capacity of the system is increased.

Advantageously, the return line comprises a heater, preferably a heating wire.

It is possible to heat the gas containing ammonia while it goes to the tank and thus to prevent it from condensing into a liquid form or generating solid deposit. Condensation and solid formation are undesirable as they could induce a clogging of the return line. Moreover, it would be necessary to evaporate the condensate and thermally decompose the solid deposit, which would result in an increase in energy consumption.

Preferably, an outlet of the return line is located at a bottom of the tank.

Advantageously, the tank contains a reservoir containing the ammonia precursor.

Advantageously, the conversion system further comprises a pressure regulation unit connecting the decomposition unit to the buffer.

It is thus possible to maintain an upstream pressure from the buffer point of view, which facilitates the delivery of gas containing ammonia downstream of the decomposition unit.

Preferably, the pressure regulation unit comprises a back pressure regulator, a pressure relief valve, a high frequency open/shut valve, a turbine, a capillary tube, an orifice forming a restrictor or a combination thereof.

These elements are efficient in maintaining an upstream pressure and are widely available.

Advantageously, the ammonia precursor is under the form of a urea solution, preferably an aqueous urea solution.

This kind of ammonia precursor is easily decomposable into a gas containing ammonia and is also widely available. Furthermore, the decomposition in liquid phase limits the risk of solid deposit formation during the decomposition.

Advantageously, the conversion system further comprises a purge line having a purge inlet located downstream of the buffer.

It is thus possible to purge the gas exiting the buffer in case its composition is not the desired one. For example, if the device is a fuel cell, it is preferable that the gas does not contain air because it could react with the gas to be fed to the device or deteriorate the performances of the fuel cell electrodes, and thus deteriorate the performance of the device.

According to an embodiment of the invention, the device comprises a fuel cell.

The gas containing ammonia thus forms a hydrogen precursor to be fed at an anode of the fuel cell. Thanks to the gas contained in the buffer, it is possible to immediately start the fuel cell and the vehicle or after a very short delay.

According to another embodiment of the invention, the device comprises a selective catalytic reduction unit.

The gas containing ammonia is thus used to purify the exhaust gases of the vehicle thanks to the reduction of the nitrogen oxides by the ammonia. Thanks to the gas contained in the buffer, it is possible to eliminate these nitrogen oxides right at the start-up of the vehicle.

According to the invention, a vehicle comprising a conversion system as described above is also provided.

We will now present an embodiment of the invention given as an non-limitative example and based on the attached drawings on which:
- figures 1 to 4 are drawings of conversion systems according to four respective embodiments of the invention, and
- figure 5 is a drawing of a vehicle, according to the invention, comprising the conversion system of figure 1.

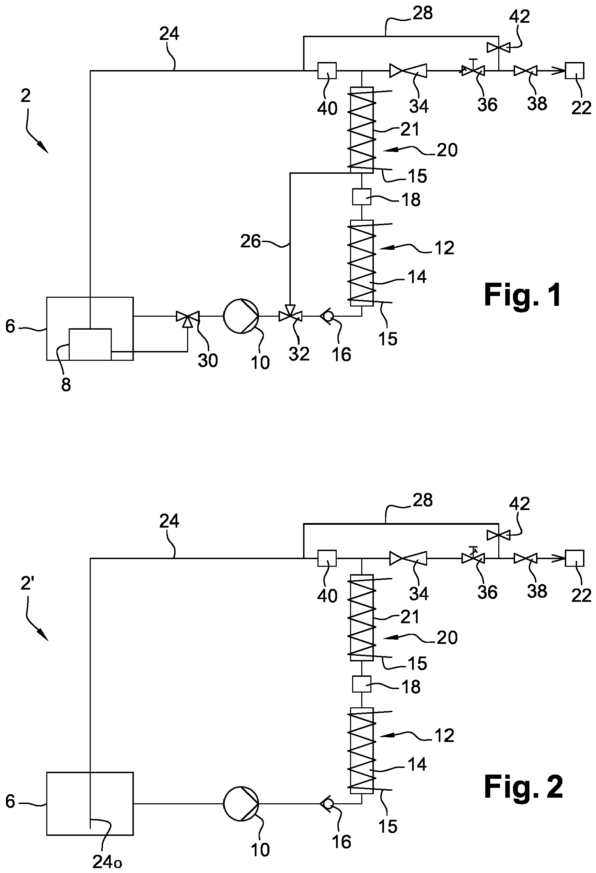

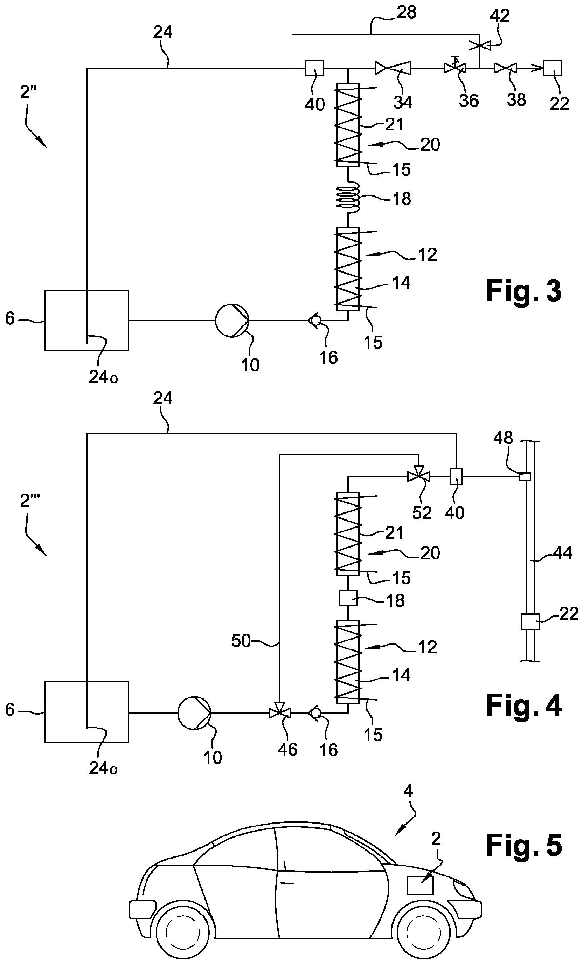

Figure 1 illustrates a conversion system 2 according to a first embodiment of the invention. The conversion system 2 is to be installed on-board a vehicle 4, as illustrated in figure 5.

The conversion system 2 comprises a tank 6 containing a reservoir 8. An ammonia precursor is stored in the tank 6 and in the reservoir 8. Here, the ammonia precursor is the one known by the commercial name Adblue® which is an aqueous urea solution having 32,5wt% of urea. Solutions with different proportions are usable, for example an aqueous urea solution having 55wt% of urea.

The conversion system 2 comprises a pump 10 able to pump and pressurize the ammonia precursor stored in the reservoir 6 and send it to a decomposition unit 12 of the conversion system 2. The decomposition unit 12 comprises a decomposition housing 14 able to store the ammonia precursor and a heater 15 able to heat the ammonia precursor in order to thermally decompose it into a gas containing ammonia. The heater 15 can be regulated by one temperature setpoint or can consist of several heating zones with specific temperature setpoints. By the decomposition of the ammonia precursor, the decomposition unit 12 produces effluents, here a gas containing NH₃, CO₂ and H₂O in proportions according to the NH₃ - CO₂ - H₂O ternary system, and resulting from the hydrolysis of the urea solution. This gas will be named "gas containing ammonia" in what follows. A non-return valve 16 is provided between the pump 10 and the decomposition unit 12 in order to prevent any backflow of ammonia precursor upstream.

The conversion system 2 comprises a pressure regulation unit 18 located downstream of the decomposition unit 12. It is arranged to create a pressure build-up inside the decomposition unit 12 before sending the effluents to a buffer 20 of the conversion system 2. The pressure regulation maintains a liquid phase in a large fraction of the content of the decomposition unit 12. In other words, the pressure regulation unit 18 is arranged to maintain a relative high pressure upstream of the buffer 20 in order to reach the required temperature for a targeted conversion level within a targeted conversion time. The high pressure is ranging from 5 to 200 bar, preferentially from 5 to 100 bar and more preferentially from 5 to 25 bar. Incidentally, the high pressure upstream of the buffer 20 facilitates the flow of gas within the decomposition system 2, downstream the decomposition unit 12. The pressure regulation unit 18 may notably comprise an element from the list consisting of a back pressure regulator, a pressure relief valve, a high frequency open/shut valve, a turbine, a capillary tube, an orifice forming a restrictor or a combination thereof. Of course, any other suitable pressure regulation unit may be chosen.

The buffer 20 comprises a buffer housing 21 suitable for storing the gas containing ammonia obtained by the decomposition of the ammonia precursor. The buffer 20 also comprises a heater 15, which may be different from the one of the decomposition unit 12, able to heat the gas in order to prevent the gas from condensing into a liquid or solid form. If liquid carry-over occurs through the pressure regulation unit 18, the liquid is further vaporized in the heated buffer 20. If the solution still contains urea, the buffer 20 can act as an extended conversion unit, increasing the residence time in order to achieve the desired conversion level. It should be noted that the buffer 20 can have other shapes, not represented here. For example, it can be the volume of the tube insuring the transport of the gas containing ammonia.

The conversion system 2 comprises a device 22 which is to be fed with the gas containing ammonia. In this embodiment, the device 22 comprises a fuel cell comprising an anode to be fed with an ammonia-containing gas flow. To this end, it comprises a hydrogen conversion unit (not represented) able to transform the ammonia contained in the gas into dihydrogen. Fuel cells based on hydrogen/oxygen reactions are well known and will not be further described in what follows.

The pressure inside the buffer 20 is at least higher than the required pressure for operating the fuel cell 22, in the [0.1 bar, 10 bar] range, preferentially in the [0.1 bar, 5 bar] range and more preferentially in the [0.1 bar, 3 bar] range, all these values being relative pressure values. The gas containing ammonia stored in the buffer 20 can be directly processed by the fuel cell 22 or by any other unit aimed at delivering a suitable fuel. This introduces a fast response complying with a dynamic behavior of the fuel cell 22 or any device processing the gas containing ammonia. In that way, the decomposition unit 12 can work in a continuous mode with a set of pre-determined parameters, such as pressure and temperature therein. The buffer 20 provides a storage capacity for the necessary amount of gas containing ammonia coping with the consumption of the fuel cell 22.

First order approximations allow the determination of a relationship between the conversion level of the ammonia precursor inside the decomposition unit 12 and its time of residence therein. In parallel, the feeding rate required for the good operation of the fuel cell 22 determines the pump 10 flow rate. It is then possible to calculate the optimal dimension of the decomposition housing 14 by the means of the pump 10 flow rate and the residence time.

The conversion system 2 comprises a return line 24 connecting the buffer 20 to the tank 6, more precisely to the reservoir 8. The return line 24 permits the excess of gas containing ammonia which does not fit in the buffer 20 to be sent to the reservoir 8, thus preventing important increases in pressure inside the buffer 20. If the output of the decomposition unit 12 overcomes the storage capacity of the buffer 20, in case of a low fuel demand from the fuel cell 22 for example, the return line 24 is provided to send the excess of gas containing ammonia in the reservoir 8. If necessary, the return line 24 is heated by using a heating wire to avoid condensation and solid deposit. The reservoir 8 thus acts as a safe storage place for the condensed effluents. In case of a leak, the potentially toxic chemicals, like ammonia gas, that could be generated are to be confined inside the tank 6 and mostly trapped in the urea solution, thus avoiding any reject in the surrounding environment. A gas containing ammonia is readily generated from the effluents stored in the reservoir 8, and available to be used at the vehicle start-up to feed the fuel cell 22. The start-up time is shorter, as the step of urea conversion is skipped in this case. The effluents containing ammonia are sent to the decomposition unit 12 through pump 10 and then to the buffer 20.

The conversion system 2 comprises a reconversion line 26 connecting the buffer 20 to the non-return valve 16 and the decomposition unit 12. The reconversion line 26 is arranged to send the non-decomposed ammonia precursor contained in the buffer 20 to be decomposed in the decomposition unit 12 rather than leaving it in the buffer 20 to be decomposed by the heater 15. In order to drain the non-decomposed ammonia precursor from the buffer 20, the pump 10 here operates in reverse mode.

The conversion system 2 comprises a purge line 28 connecting an inlet of the device 22 to the return line 24. The purge line 28 is arranged to evacuate the gas contained in the conversion system 2 between the buffer 20 and the device 22. A purge is notably commanded upon the first start-up of the vehicle 4 in order to evacuate the air contained therein and thus prevent it from reaching the anode of the fuel cell.

The flow of ammonia precursor and gas containing ammonia within the conversion system 2 is commanded by the means of various valves.

A feed three-way valve 30 is provided between the tank 6, the reservoir 8 and the pump 10. The feed three-way valve 30 is provided in order to put the tank 6 in communication with the decomposition unit 12 in view of the decomposition of the ammonia precursor. It is also provided in order to put the reservoir 8 in communication with the decomposition unit 12 to permit the flow of the effluents contained in the reservoir 8 for start-up.

A conversion three-way valve 32 is provided between the pump 10, the non-return valve 16 and the return line 26.

A pressure reducer 34 is provided at an outlet of the buffer 20 and a dosing valve 36 is provided downstream of the pressure reducer 34. The amount of gas containing ammonia which is sent to the fuel cell 22 is measured by the dosing valve 36 which is operated through an electronic control unit (ECU, not represented) in order to adjust the gas flow to the fuel cell 22. The pressure reducer 34 mounted between the buffer 20 and the dosing valve 36 is used to stabilize the pressure at the value which is required for operating the fuel cell 22.

A device valve 38 is provided at an inlet of the device 22.

A return valve 40 is provided between the buffer 20 and the return line 24. The maximum pressure inside the buffer 20 is set by the cracking pressure of the return valve 40. When the return valve 40 is open, the flow goes through the return line 24 and is trapped in the reservoir 8 located inside the tank 6. In other words, the return valve 40 is used to limit the pressure inside the buffer 20.

A purge valve 42 is provided between the dosing valve 36, the device valve 38 and the purge line 28. The purge valve 42 is controllable by the electronic control unit (ECU) and permits the purge operation described above.

Fuel cell operation 22 can be sensitive to the presence of oxygen at a fuel side of the fuel cell 22, that is to say its anode side, which is detrimental for some of its components. The purge line 28 serves to remove the air located inside the system 2, especially at the first start-up. The pump 10 is on in order to fill completely the decomposition unit 12 with the ammonia precursor. Then the heater 15 of the decomposition unit 12 is powered and the ammonia precursor is decomposed, producing a gaseous mixture of ammonia, carbon dioxide and water vapor at the outlet of the pressure regulation unit 18. The buffer 20, as well as the pressure regulation unit 18 and the dosing valve 36 in open position are flushed with the gaseous flow. The device valve 38 is in the closed position and the purge valve 42 in the open position so that the purging flow goes through the purge line 28 and the return line 24 to the reservoir 8 acting as a gas trap. As the pump 10 is running, the buffer 20, all the components and the line between its outlet and the reservoir 8 are flushed with an amount of gas containing ammonia which is equivalent to several volumes of the portion of the system to be purged.

At start-up of the fuel cell 22, it can be interesting to flush the anode side with a flow of gas containing ammonia during the heat-up time of the fuel cell 22. This flow is provided by the pressurized gas containing ammonia which remains in the buffer 20. This gaseous flow can be also produced from the effluents which are stored in the reservoir 8. This is done when the reservoir 8 is in fluidic communication with the pump 10 through the feed three-way valve 30, and when the pump 10 is in fluidic communication with the buffer 20 through the conversion three-way valve 32 and line 26. Part or all of the effluents may also flow through the decomposition unit 12 in parallel to the reconversion line 26. The buffer 20 is heated in order to generate a gas flow which is further directed to the fuel cell 22 through the valves 34 and 36.. The flow rate of effluents is controlled by a valve (not shown in figure 1), downstream the outlet of the anode side of the fuel cell 22, for example. The flow in excess is returned to the reservoir 8.

At vehicle shut-down, the gas containing ammonia that could be produced following the thermal inertia of the decomposition unit 12 and the buffer 20 can be safely evacuated in the reservoir 8 through the purge line 28 and the return line 24.

As such, the system 2 is able to work in a continuous mode in order to deliver a flow rate of effluents in adequacy with the need to feed a fuel cell 22. The system 2 can also work in a batch operation mode according to the following sequence of events:
- running the pump 10 to transfer the ammonia precursor from the tank 6 to the decomposition unit 12, the valve 36 is in a closed position; if not, the valves 38 and 42 have to be closed;
- stopping the pump 10;
- thermally hydrolyzing the ammonia precursor in the decomposition unit 12, as the set pressure of the pressure regulation unit 18 is higher than the vapor pressure of the gas containing ammonia; bleeding through the pressure regulation device can start in case the set pressure of the pressure regulation device 18 is lower than the vapor pressure of the gas containing ammonia inside the decomposition unit 12;
- running the pump 10 to push the effluents in the buffer 20 where they vaporize. The decomposition unit 12 is filled again with the ammonia precursor, ready to undergo decomposition. It is also possible to transfer the gas containing ammonia from the decomposition unit 12 to the buffer 20 without running the pump 10, and to heat up further the decomposition unit 12 so that the pressure generated by the gas containing ammonia is higher than the set pressure of the pressure regulation unit 18.
- opening valves 36 and 38 to feed the fuel cell 22, the purge valve 42 still being in a closed position.

A way of determining the necessary back pressure for the pressure regulation unit 18 in order to obtain a continuously running system 2 consists of considering the water pressure at the temperature of operation. Of the three gaseous components, ammonia, carbon dioxide and water vapor, water is the less volatile. In order to avoid any accumulation inside the decomposition unit 12, the operating conditions are such that the setting of the back pressure of the pressure regulation unit 18 is rather close to the vapor pressure of the less volatile component, so that the content of the decomposition unit 12 can be released as a gas phase. Hence, the following sequence is implemented for the dimensioning of the system:
- selecting conversion back pressure P,
- selecting the tabulated value of temperature T related to the vapor pressure P of water, temperature T corresponding to the minimal temperature Tₘᵢₙ for the decomposition unit;
- selecting from table the reaction rate k at temperature Tₘᵢₙ for the urea hydrolysis,
- selecting urea conversion level,
- determining residence time from conversion level and using the first order kinetic equation of urea hydrolysis reaction,
- determining the maximum size of the decomposition unit (depending on the space available on-board the vehicle),
- determining the urea solution maximum flow rate based on the residence time and the decomposition unit size.

For a decomposition unit with a maximum size given by construction and a residence time defined by a desired flow rate, the selection of a conversion level (usually higher than 99%) determines the value of the reaction rate k. In turn, this k value is related to a temperature and the setting point of the back pressure device is rather close to the vapor pressure of water at this very temperature.

To design a decomposition unit suitable for vehicle integration, a somewhat modified flow-chart is to be used, as:
- the size of the decomposition unit is limited by the available space on-board a vehicle
- the maximum flow rate is given by the specification of the fuel cell
- a high conversion level (> 99%) is to be achieved

The operating temperature for the urea solution decomposition reaction is determined, and the back pressure is rather close to the water vapor pressure which is associated to the operating temperature. The method is as follows:
- determining the residence time in the conversion unit 12 by the mean of the fuel cell maximum feeding flow rate and the decomposition unit size;
- determining the reaction rate constant by the means of the residence time in the conversion unit 12 and the conversion level,
- determining the operating temperature by the means of the reaction rate constant and Arrhenius plot for the urea hydrolysis reaction;
- determining the operating pressure by the means of the operating temperature and the water vapor pressure vs. temperature curve.

As the conversion level is set at a maximum, the maximum available space for the decomposition unit and the maximum feeding flow rate required by the fuel cell are enough to set the minimum temperature for operating the decomposition unit. However, as built, the system is quite flexible. For example, if required, the system can cope with the delivery of a lower flow rate than the maximum flow rate related to the fuel cell specification.

Further alternative embodiments will now be described. Every element in common in the different embodiments will bear the same numeral reference.

Figure 2 illustrates a conversion system 2' according to a second embodiment of the invention. It differs from the conversion system of the previous embodiment in that an outlet 24o of the return line 24 is located at the bottom of the tank 6.

At fuel cell shut-down, the conversion of the ammonia precursor inside the decomposition unit 12 can be further carried out while the buffer 20 cools down as the related heater 15 is off. The buffer 20 can act as a storage of the gas containing ammonia as a vapor liquid bi-phasic system, comprising vapor and liquid, or liquid and precipitates, and as solid, depending on the initial composition of the ammonia precursor and the temperature inside the buffer 20. The gas containing ammonia is accumulated inside the buffer 20 and is made available as gaseous flow upon heating at the next start-up phase of the vehicle 4, to flush the downstream circuit, in particular the fuel cell 22 anode.

Figure 3 illustrates a conversion system 2" according to a third embodiment of the invention. It differs from the conversion system of the previous embodiment in that the pressure regulation unit 18 comprises a capillary tube. Its inlet is connected to an outlet of the decomposition unit 12, and its outlet is connected to an inlet of the buffer 20. The capillary tube permits a large pressure drop of the gas exiting the decomposition unit 12 before entering the buffer 20.

To start-up the system 2", the decomposition unit 12 is filled with the ammonia precursor up to its outlet. Then, the heater 15 of the decomposition unit 12 is powered, and the gaseous products, comprising ammonia gas, carbon dioxide and water vapor, are discharged at an outlet of the capillary tube into the buffer 20. The decomposition unit 12 is fed continuously by running the pump 10.

Figure 4 illustrates a conversion system 2"' according to a fourth embodiment of the invention. It differs from the conversion system of the previous embodiments in that the device 22 comprises a selective catalytic reduction (SCR) unit.

This embodiment is aimed at providing a reductant for the removal of the nitrogen oxides from the exhaust gases of the vehicle 4, using the selective catalytic reduction (SCR) technology. More precisely, the properties of the gas containing ammonia as prepared by the conversion of the ammonia precursor are such that ammonia, the active chemical in the DeNOx reaction, is more readily available, especially in the case of a vehicle start-up in cold conditions. Hence, the start-up time of the depollution system is reduced. The hydrolysis of the ammonia precursor is achieved during a driving period of the vehicle 4, i.e. when power is available for conversion purpose, and the effluents are stored in the buffer 20. Thanks to the return line 24 and the return valve 40, it is also possible to store the effluents in the tank 6. If a next key-on occurs in cold conditions, meaning that the urea solution is frozen, the gas, liquid or slurry containing ammonia in the buffer 20 is used as reductant and injected in an exhaust line 44 of the vehicle 4. In the meantime, thawing of the frozen urea solution occurs, so that enough liquid for injection in the exhaust line 44 is available when the gas containing ammonia is about to run out. A portion of the urea solution is also introduced in the conversion unit 12 to be transformed into gas containing ammonia which is further stored in the buffer 20 to be available for the next key-on in cold start conditions.

As illustrated in Figure 4, the system 2"' comprises a three-way injection valve 46 and an injector 48, connected via an injection line 50, to spray the gas or liquid containing ammonia in the SCR unit 22 passing through the exhaust line 44. At cold start, the buffer 20 is in fluid communication through a three-way injection valve 52 with the injector 48 to spray the gas containing ammonia in the exhaust line 44 upstream the SCR unit 22. If necessary, the buffer 20 is heated in order to pressurize the gas containing ammonia at the required level for injection.

A thawed portion of the urea solution is pumped from the tank 6 to the decomposition unit 12 through the three-way injection valve 46. When the decomposition unit 12 is filled, the tank 6 is in fluid communication with the injector 48 through the three-way injection valve 46, the injection line 50 and the three-way exhaust valve 52, so that the ammonia precursor is injected in the exhaust line 44.

The urea solution inside the decomposition unit 12 is hydrolyzed, and the buffer 20 is further filled with the gas containing ammonia, so that the system is ready for the next key-on in cold conditions.

The invention is not limited to the embodiment described above. Other embodiments will appear clearly to the skilled person.

## Claims

1. A conversion system (2; 2'; 2"; 2"') to be mounted in a vehicle (4), **characterized in that** it comprises:
- a tank (6) suitable for containing an ammonia precursor,
- a decomposition unit (12) for decomposing the ammonia precursor into a gas containing ammonia,
- a buffer (20) located downstream of the decomposition unit (12) for storing the gas produced by the decomposition unit (12),
- a device (22) to be fed with the gas stored in the buffer (20), and
- a return line (24) connecting the buffer (20) to the tank (6).

2. The conversion system (2; 2'; 2"; 2"') according to the preceding claim, wherein the return line (24) comprises a heater, preferably a heating wire.

3. The conversion system (2; 2'; 2"; 2"') according to any of the preceding claims, wherein an outlet of the return line (24) is located at a bottom of the tank (6).

4. The conversion system (2; 2'; 2"; 2"') according to any of the preceding claims, wherein the tank (6) contains a reservoir (8) containing the ammonia precursor.

5. The conversion system (2; 2'; 2"; 2"') according to any of the preceding claims, further comprising a pressure regulation unit (18) connecting the decomposition unit (12) to the buffer (20).

6. The conversion system (2; 2'; 2"; 2"') according to the preceding claim, wherein the pressure regulation unit (18) comprises a back pressure regulator, a pressure relief valve, a high frequency open/shut valve, a turbine, a capillary tube, an orifice forming a restrictor or a combination thereof.

7. The conversion system (2; 2'; 2"; 2"') according to any of the preceding claims, wherein the ammonia precursor is under the form of a urea solution, preferably an aqueous urea solution.

8. The conversion system (2; 2'; 2"; 2"') according to any of the preceding claims, further comprising a purge line (28) having a purge inlet located downstream of the buffer (20).

9. The conversion system (2; 2'; 2") according to any of the preceding claims, wherein the device (22) comprises a fuel cell.

10. The conversion system (2"') according to any of claims 1 to 8, wherein the device (22) comprises a selective catalytic reduction unit.

11. A vehicle (4) comprising a conversion system (2; 2'; 2"; 2"') according to any of the preceding claims.
